# EUROPÄISCHE PATENTSCHRIFT

(11) **EP 4 464 888 B1**
(45) Veröffentlichungstag und Bekanntmachung des Hinweises auf die Patenterteilung: **08.10.2025**
(21) Anmeldenummer: 24176049.5
(22) Anmeldetag: 15.05.2024
(51) Int. Cl.: F03D 1/06

(54) **SEGMENTIERTES ROTORBLATT FÜR WINDKRAFTANLAGEN**
SEGMENTED ROTOR BLADE FOR WIND TURBINES
PALE DE ROTOR SEGMENTÉE POUR ÉOLIENNES

(30) Priorität: 16.05.2023 DE 102023112869
(43) Veröffentlichungstag der Anmeldung: 20.11.2024
(73) Patentinhaber: Deutsches Zentrum für Luft- und Raumfahrt e.V., 53227 Bonn-Oberkassel (DE)
(72) Erfinder: Beyland, Lutz, 38110 Braunschweig (DE); Bäns, Constantin, 22529 Hamburg (DE); Hindersmann, Arne, 21684 Stade (DE)
(74) Vertreter: Gramm, Lins & Partner Patent- und Rechtsanwälte PartGmbB

(56) Entgegenhaltungen:
- CN-U- 203 670 111
- US-A1- 2006 083 611
- US-A1- 2008 232 966

## Beschreibung

Die vorliegende Erfindung betrifft ein segmentiertes Rotorblatt für Windkraftanlagen mit mindestens zwei Blattsegmenten, die sich in entgegengesetzter Richtung von einer Fügestelle aus in eine Längsrichtung erstrecken, wobei jedes Blattsegment mindestens ein innenliegendes Holmelement aufweist, das ein Strukturelement des Rotorblattes bildet.

Mit dem zunehmenden Ausbau erneuerbarer Energien rückt zunehmend auch die Frage der Effizienz solcher auf erneuerbare Energien basierender Energieanlagen in den Fokus. Gerade im Bereich der Windkraftanlagen, auch Windenergieanlagen genannt, hat es sich gezeigt, dass mit zunehmender Größe der Rotorblätter auch deutlich mehr Energie gewonnen werden kann, was den Einsatz derartiger Windkraftanlagen rentabler macht.

Mit zunehmender Länge der Rotorblätter entsteht allerdings das Problem, dass der Transport zum Errichtungsstandort immer häufiger zu hohen Kosten führt und teilweise gar nicht möglich ist. Denn ab einer gewissen Länge der Rotorblätter können diese nicht mehr ohne weiteres auf den öffentlichen Infrastrukturwegen transportiert werden. Eine Lösung dieses Transportproblems sind segmentierte Rotorblätter, bei denen das Rotorblatt in seiner Länge in zwei oder mehr Segmente unterteilt wird. Diese Segmente werden dann separat transportiert und erst am Errichtungsstandort zusammengefügt.

Segmentierte Rotorblätter benötigen eine Verbindungstechnik an ihrer Fügestelle. Dafür werden häufig Insert-Verschraubungen eingesetzt, um die einzelnen Rotorblattsegmente kraft- und formschlüssig miteinander zu verbinden.

Aus der WO 2010/023299 A2 ist ein segmentiertes Rotorblatt bekannt, das an seinen Holmen zusammengesetzt ist. Hierfür ragt bei einem Segment der Holmabschnitt über die Fügestelle hinaus in das zweite Segment hinein, wobei mit Hilfe einer Schraubverbindung die Holme gegeneinander fixiert werden. Hierbei ist unter anderem vorgesehen, dass mit der Holmenverschraubung die Holme kraftschlüssig aneinandergedrückt werden, um so eine möglichst hohe Stabilität und Steifigkeit zu erreichen.

Nachteilig hierbei ist insbesondere die Tatsache, dass die für die Verschraubung notwendigen Bauteile sehr genau gefertigt werden müssen, da es ansonsten zu Spannungen innerhalb der Bauteile führen kann, die zum Versagen der Schraubverbindung beitragen können. Gerade im Bereich von Rotorblättern aus faserverstärkten Kunststoffen ist jedoch ein solches Toleranzmaß nicht immer gegeben.

Aus der EP 2 288 807 B1 ist des Weiteren ein segmentiertes Rotorblatt bekannt, bei dem sich bei einem der Segmente ebenfalls der Holmabschnitt über die Fügestelle hinaus bis in das andere Segment erstreckt. Die beiden Segmente werden dabei mittels der Holme an den Stirnseiten der Holme verschraubt, um so eine kraftschlüssige Verbindung an der Fügestelle zu erreichen.

Aus der DE 31 09 566 C2 ist ein Rotorblatt für Windenergiemaschinen und Spannvorrichtungen zur Montage offenbart, wobei zwei Rotorblatt-Segmente mittels einer Dehnschraube zusammengehalten werden.

Aus der DE 10 2008 055 513 A1 ist ein Rotorblatt für Windkraftanlagen bekannt, das ebenfalls aus mehreren Segmenten besteht, wobei die einzelnen Segmente mithilfe einer Verklebung zusammengefügt werden.

Aus der WO 2009/090537 A2 und sowie der WO 2011/067323 A2 ist jeweils ein segmentiertes Rotorblatt bekannt, bei denen sich ein Verbindungselement in das jeweils andere Blattsegment hinein erstreckt und dort mittels Verschraubung befestigt wird.

Aus der WO 2016/087594 A1 ist ein segmentiertes Rotorblatt für Windkraftanlagen bekannt, wobei die Blattsegmente jeweils mindestens ein Holmelement umfassen, die zum Verbinden ineinander geschoben werden. Ein durch beide Holmelemente geführter Querbolzen sichert dabei die Verbindung, wobei der Querbolzen in einer Gleitbuchse, die in den jeweiligen Öffnungen der Holmelemente enthalten ist, gelagert wird.

Weiterer Stand der Technik ist in US 2006/083611 offenbart.

Ein großes Problem bei der Verbindung von segmentierten Rotorblättern mittels einer Schraubverbindung bei ineinander geschobenen Holmen besteht in der Tatsache, dass die an der Schraubverbindung beteiligten Buchsen der beiden Holmabschnitte hochgenau positioniert werden müssen, damit diese exakt axial fluchten. Erst hierdurch wird eine spielfreie Verbindung der beiden Rotorblattsegmente möglich, die den Beanspruchungen einer Windkraftanlage im Dauerbetrieb standhält. In der Praxis werden hierfür die in den Holmen benötigten Öffnungen im zusammengesteckten Zustand in einem Arbeitsschritt hergestellt, was bedingt, dass die einzelnen Segmente bei der Herstellung des Rotorblattes zumindest einmal zusammengebaut werden müssen, um die Buchsen-Bohrungen herstellen zu können. Dies hat allerdings mehrere Nachteile. Zum einen wird viel Platz in der Produktionshalle benötigt, was sich negativ auf die Investitionskosten auswirkt. Darüber hinaus ist ein weiterer Verarbeitungsschritt notwendig, der Zeit in Anspruch nimmt, was zu Lasten der Produktivität geht. Schließlich hat die aus der Praxis bekannte Technik den Nachteil, dass immer nur die beiden gemeinsam gebohrten Flügelsegmente zueinander passen, was bedingt, dass die einzelnen Segmente nicht in Serie gefertigt werden können, sondern immer nur paarweise. Ein variabler Austausch der Segmente untereinander ist somit nicht mehr möglich.

Darüber hinaus ist die Tragfähigkeit der Insert-Verschraubung zu gering für moderne, schlanke und sehr lange Rotorblätter. Einerseits begrenzt die Ausreißkraft des Inserts aus dem Laminat die Tragfähigkeit, andererseits ist die Festigkeit des verbindenden Längsbolzens begrenzt. Eine Blattsegmentierung kann so nur gelingen, wenn die Segmentierungsposition weit in Richtung Blattspitze verschoben wird (auf ca. 80% der Blattlänge). Eine Teilung in Blattmitte ist aus Transportsicht aber deutlich vorteilhafter, da die maximale Komponentenlänge minimiert ist. Außerdem ist oft eine Profilvergrößerung an der Segmentierungsposition notwendig, um mehr Platz für die Verbindungselemente zu generieren und das Widerstandsmoment gegen Biegung zu erhöhen. Eine Profilvergrößerung führt zu aerodynamischen Verlusten, so dass die Wirtschaftlichkeit der gesamten Windenergieanlage beeinträchtig wird.

Es ist daher Aufgabe der vorliegenden Erfindung ein verbessertes Rotorblatt anzugeben, welches hinsichtlich des Transports sinnvoll segmentiert werden kann und dabei gleichzeitig eine hohe Verbindungsqualität aufweist.

Die Aufgabe wird mit dem segmentierten Rotorblatt gemäß Anspruch 1 erfindungsgemäß gelöst. Vorteilhafte Ausgestaltungen der Erfindung finden sich dann in den entsprechenden Unteransprüchen.

Gemäß Anspruch 1 wird ein segmentiertes Rotorblatt für Windkraftanlagen mit mindestens zwei Blattsegmenten vorgeschlagen, die sich in entgegengesetzter Richtung von einer Fügestelle aus in eine Längsrichtung erstrecken, wobei jedes Blattsegment mindestens ein innenliegendes Holmelement aufweist, das ein Strukturelement des Rotorblattes bildet, wobei
a) das erste Holmelement des ersten Blattsegmentes und das zweite Holmelement des zweiten Blattsegmentes an der Fügestelle mit ihren Stirnseiten mittels einer Verbindungsanordnung aneinandergefügt sind,
b) wobei die Verbindungsanordnung eine Mehrzahl von Verbindungsgarnituren aufweist, die jeweils die Holmelemente miteinander verbinden,
c) wobei jede Verbindungsgarnitur einen ersten Querbolzen, einen zweiten Querbolzen und wenigstens eine Verbindungslasche umfasst, die an ihren Enden eine erste Laschenöffnung und eine zweite Laschenöffnung aufweist,
d) wobei bei jeder Verbindungsgarnitur der erste Querbolzen quer zur Längsrichtung des Rotorblattes durch eine Holmöffnung im ersten Holmelement sowie die erste Laschenöffnung der Verbindungslasche und der zweite Querbolzen quer zur Längsrichtung des Rotorblattes durch eine Holmöffnung im zweiten Holmelement sowie die zweite Laschenöffnung der Verbindungslasche geführt ist, sodass die Verbindungslasche die Holmelemente miteinander verbindet, und
e) wobei wenigstens der erste Querbolzen einer ersten Verbindungsgarnitur und der zweiten Querbolzen einer der ersten Verbindungsgarnitur gegenüberliegenden zweiten Verbindungsgarnitur über zumindest ein erstes Schubverbindungselement miteinander verbunden sind.

Demnach werden die beiden Holmelemente der Blattsegmente an ihren Stirnseiten aneinandergefügt und dann mithilfe einer Mehrzahl von Verbindungsgarnituren zusammengefügt, sodass die Holmelemente insbesondere nicht ineinandergeschoben werden müssen. Vielmehr werden die Holmelemente stirnseitig angefügt und dann mithilfe der Verbindungsgarnituren kraft- und formschlüssig miteinander verbunden, wobei sich die Holmelemente an ihren Stirnseiten nicht zwangsläufig berühren müssen. Die Holmelemente werden insbesondere nicht ineinandergeschoben, um so eine Verbindung der Blattsegmente herzustellen.

Jedes Holmelement weist für die entsprechende Verbindungsgarnitur eine Holmöffnung auf, durch die ein Querbolzen geführt wird. Der Querbolzen dient dabei dazu, die Verbindungslasche mit dem jeweiligen Holmelement zu verbinden. Hierfür wird der Querbolzen durch eine der Laschenöffnungen der Verbindungslasche geführt, sodass der Querbolzen sowohl durch die Verbindungslasche als auch durch die Holmöffnung des Holmelementes geführt wird. Ein zweiter Querbolzen wird dann durch die Holmöffnung des anderen Holmelementes sowie durch die gegenüberliegende Laschenöffnung der Verbindungslasche geführt, sodass die Holmelemente mithilfe der beiden Querbolzen und der verbindenden Verbindungslasche miteinander verbunden werden.

Da mehrere Verbindungsgarnituren existieren, können so die Holmelemente fest miteinander verbunden werden.

Erfindungsgemäß ist dabei weiter vorgesehen, dass der erste Querbolzen einer ersten Verbindungsgarnitur und der zweite Querbolzen einer zweiten Verbindungsgarnitur über zumindest ein erstes Schubverbindungselement miteinander verbunden sind, sodass Schubkräfte über die Verbindungsstelle übertragen werden können. Die Anbindung der Schubverbindungselemente, beispielsweise ausgebildet in Form einer Schubstange, an die Querbolzen ist dabei besonders günstig, da die Querbolzen aufgrund ihrer massiven Bauweise eine hohe Anbindungsfestigkeit ermöglichen und so keine weiteren Anbindungsstellen an den Blattsegmenten ausgebildet werden müssen. So können Masse und Komplexität reduziert werden.

Das Schubverbindungselement verbindet dabei einen ersten Querbolzen, der in eine Holmöffnung des ersten Holmelementes angeordnet ist, mit einem zweiten Querbolzen, der in eine Holmöffnung des zweiten Holmelementes angeordnet ist. Somit können die Schubkräfte sicher über die Verbindungsanordnung übertragen und abgetragen werden und damit die Verbindungsanordnung deutlich stabiler gestalten.

Dabei liegen die Verbindungsgarnituren, deren erste und zweite Querbolzen über das Schubverbindungselement miteinander verbunden werden, in der Verbindungsanordnung gegenüberliegend vor, sodass das Schubverbindungselement von einer ersten Seite der Holmelemente auf eine gegenüberliegende zweite Seite der Holmelemente verläuft, beispielsweise von einer Vorderseite zu einer Rückseite des Rotorblattes.

Im Gegensatz zum Stand der Technik wird hierbei auf eine Längsverschraubung verzichtet, sondern stattdessen eine Verbindung über Querbolzen realisiert, da diese grundsätzlich eine höhere Verbindungsfestigkeit aufweisen. So können die Masse und die Komplexität des segmentierten Rotorblattes reduziert werden.

Das Rotorblatt kann dabei aus einem Faserverbundwerkstoff aufweisend ein Fasermaterial und ein das Fasermaterial einbettendes Matrixmaterial hergestellt sein. Insbesondere die Holmelemente des Rotorblattes können aus einem solchen Faserverbundwerkstoff hergestellt sein. Als Fasermaterial eignen sich hierbei beispielsweise GFK oder ein CFK. Denkbar ist allerdings auch, dass ein Faser-Metall-Laminat (FML) Werkstoff eingesetzt wird, bei dem sich Lagen von Fasermaterial und Lagen von Metallmaterial abwechseln und so eine besonders hohe Verbindungsfestigkeit erreichen. Der Einsatz von Faser-Metall-Laminaten ist dabei besonders bevorzugt im Bereich der Holmöffnungen vorteilhaft, um eine besonders hohe Lochleibungsfestigkeit zu erzielen und eine feste Verbindung zu realisieren.

Das Material der Verbindungslaschen kann dabei beispielsweise ein Metallmaterial (Stahl, z.B. 1.7225) sein. Metallische Verbindungslaschen können kostengünstig aus Blechen (Dicke vorzugsweise 10 bis 100 mm) hergestellt werden, beispielsweise durch Plasmaschneiden, Wasserstrahlschneiden, Laserschneiden, Drahterodieren oder Stanzen. Alternativ können die Verbindungslaschen auch in variablen, lastgerechten Dicken geschmiedet werden.

Alternativ zu den metallischen Werkstoffen können die Verbindungslaschen auch aus einem FML (Faser-Metall-Laminat) gefertigt werden, bspw. ähnlich dem FML, welches im Verbindungsbereich eingesetzt wird. Dadurch kann das Gewicht der Verbindungstechnik reduziert werden. Alternativ werden die Verbindungslaschen aus eine reinen Faserkunststoffverbund hergestellt, um weiter Gewicht zu sparen. Mittels faserverstärktem 3-D-Druck oder Fiber Placement können dabei die Fasern optimal in Lastrichtung ausgerichtet werden, und zwar insbesondere in radialer an tangentialer Richtung an den Laschenöffnungen.

Dabei können pro Verbindungsgarnitur mindestens zwei Verbindungslaschen vorgesehen sein, um die Festigkeit der Verbindungsgarnitur zu erhöhen. Die erste Verbindungslasche wird dabei an einer ersten Seitenfläche der Holmöffnung an einem ersten Ende der Querbolzen angeordnet, während die zweite Verbindungslasche an einer der ersten Seitenfläche gegenüberliegenden zweiten Seitenfläche der Holmöffnung an einem zweiten Ende des Querbolzens angeordnet wird. Zwischen den beiden Verbindungslaschen befinden sich dabei die Abschnitte der zu verbindenden Holmelemente.

Gemäß einer Ausführungsform ist vorgesehen, dass der zweite Querbolzen der ersten Verbindungsgarnitur und der erste Querbolzen der zweiten Verbindungsgarnitur über ein zweites Schubverbindungselement miteinander verbunden sind.

Hierdurch wird eine Art über Kreuz Schubverbindung realisiert, um so eine optimale Abtragung der Schubkräfte zu erreichen.

Gemäß einer Ausführungsform ist vorgesehen, dass das erste Holmelement und das zweite Holmelement jeweils ein erstes Gurtelement und ein gegenüberliegendes zweites Gurtelement haben, die beide durch wenigstens ein dazwischenliegendes Stegelement miteinander verbunden sind, wobei die Querbolzen in Holmöffnungen der Gurtelemente quer zur Längsrichtung des Rotorblattes eingebracht sind.

Bei den Gurtelementen handelt es sich um längliche, flächige und/oder bandförmige Elemente, die zusammen mit dem dazwischenliegenden Stegelement das Holmelement bilden. Im Querschnitt weist ein solches Holmelement mit Gurtelementen und Stegelement eine profilierte Form auf, beispielsweise in Form eines U-Profils oder eines Doppel-T-Profils. Denkbar ist aber auch, dass die Holmelemente eine geschlossene Querschnittsform aufweisen und so beispielsweise eine Röhrenform bilden. Die beiden Gurtelemente werden dabei an ihren beiden länglichen Seiten über die Stegelemente verbunden.

Bevorzugtes ist dabei vorgesehen, dass im Bereich der Verbindungsanordnung das mindestens eine Stegelement eine Aussparung aufweist, um nicht nur Gewicht bei den Holmen Elementen einzusparen, sondern aufgrund eines verbesserte Zugänglichkeit zu der Verbindungsanordnung zu ermöglichen. Dies ist besonders dann vorteilhaft, wenn das Stegelement mittig der Breite der Gurtelemente verläuft.

Gemäß einer Ausführungsform hierzu ist vorgesehen, dass die erste Verbindungsgarnitur das erste Gurtelement des ersten Holmelementes mit dem ersten Gurtelement des zweiten Holmelementes und die zweite Verbindungsgarnitur das zweite Gurtelement des ersten Holmelementes mit dem zweiten Gurtelement des zweiten Holmelementes verbindet.

Da die Gurtelemente in der Regel gegenüberliegend angeordnet sind und sich dazwischen das Stegelement erstreckt, liegen die erste Verbindungsgarnitur und die zweite Verbindungsgarnitur ebenfalls gegenüber, dass zwischen Ihnen das erste und ggf. auch das zweite Schubverbindungselement angeordnet werden kann.

Dabei ist es denkbar, dass ein solches Paar von erster und zweiter Verbindungsgarnitur sowohl auf der linken Seite der Gurtelemente als auf der rechten Seite der Gurtelemente vorgesehen ist, wobei zwischen diesen Paaren von Verbindungsgarnituren dann das Stegelement verläuft. Vorzugsweise ist das Stegelement im Bereich der Verbindungsanordnung ausgespart, um eine Zugänglichkeit zu den Elementen der Verbindungsanordnung zu gewährleisten.

Gemäß einer Ausführungsform ist vorgesehen, dass die Verbindungslaschen an ihren beiden Enden einen Kopfabschnitt mit den Laschenöffnungen aufweisen, die über einen Verbindungsabschnitt miteinander verbunden sind, wobei die Breite des Verbindungsabschnitts in der Mitte verjüngt ist.

Dies ermöglicht eine weitere Gewichtseinsparung insbesondere dann, wenn eine Vielzahl dieser Verbindungslaschen in der Verbindungsanordnung verwendet wird. So ist es bspw. denkbar, dass für eine Verbindung von zwei Holmelemente insgesamt vier Verbindungsgarnituren verwendet werden, wobei jede Verbindungsgarnitur zwei Verbindungslaschen umfasst. Dabei können zwei Verbindungsgarnituren für die ersten Gurtelemente vorgesehen sein, während die beiden anderen Verbindungsgarnituren für die zweiten Gurtelemente vorgesehen sind.

Gemäß einer Ausführungsform ist vorgesehen, dass in zumindest einer Holmöffnung der Holmelemente eine Buchse mit einer konischen Innenwandung eingebracht ist, die mit einem Querbolzen mit einer konischen Außenwandung im eingesetzten Zustand derart zusammenwirkt, dass eine radiale Spannkraft auf die Innenwandung der Holmöffnung aufgebracht wird.

Durch die Verwendung einer solchen Spannbuchse wird der Querbolzen ohne Spiel in der Holmöffnung positioniert, sodass eine bestmögliche Kraftübertragung realisiert werden kann. Dabei kann vorgesehen sein, dass die Spannbuchse einen Flansch aufweist, um im Randbereich der Holmöffnungen an der Außenseite anzuliegen.

Des Weiteren kann es vorgesehen sein, dass die Spannbuchse und/oder der Querbolzen exzentrisch sind, um so die relative Entfernung zwischen dem ersten Querbolzen in dem ersten Holmelement und dem zweiten Querbolzen im zweiten Holmelement einstellen zu können.

Gemäß einer Ausführungsform ist vorgesehen, dass der Querbolzen im Bereich der Laschenöffnung eine konische Außenwandung aufweist, sodass zwischen einer Innenwandung der Laschenöffnung und der konischen Außenwandung des Querbolzens ein Hohlraum entsteht, in den eine konische Spreizhülse eingesetzt ist, die mittels eines an einer Stirnseite des Querbolzens angeordneten Druckdeckel in den Hohlraum eingepresst ist.

Hierdurch wird es möglich, dass die Anbindung des Querbolzens & jeweilige Verbindungslasche formschlüssig und ohne Spiel erfolgt, sodass auch hierüber eine bestmögliche Kraftübertragung realisiert wird.

Die Aufgabe wird im Übrigen auch mit der Windkraftanlage gemäß Anspruch 8 erfindungsgemäß gelöst, wobei die Windkraftanlage einem Mehrblattrotor aufweist, der mindestens ein Rotorblatt nach einem der vorhergehenden Ansprüche aufweist.

Die Erfindung wird anhand der beigefügten Figuren beispielhaft näher erläutert. Es zeigen:
- Figur 1: Draufsicht auf die erfindungsgemäße Verbindungsanordnung;
- Figur 2: Seitenansicht auf die Verbindungsanordnung;
- Figur 3: Seitenansicht auf die Verbindungsanordnung mit Abdeckung;
- Figur 4a, 4b: Darstellung der Verbindungsanordnung mit Spannbuchse;
- Figur 5a, 5b: Darstellung der Verbindungsanordnung mit zusätzlicher Spreizhülse;
- Figur 6: schematische Darstellung der Montage des Verbindungsbolzens des eines Werkzeugs.

Gleiche Bezugszeichen in den Figuren bezeichnen auch jeweils dieselben Elemente in den jeweils anderen Figuren.

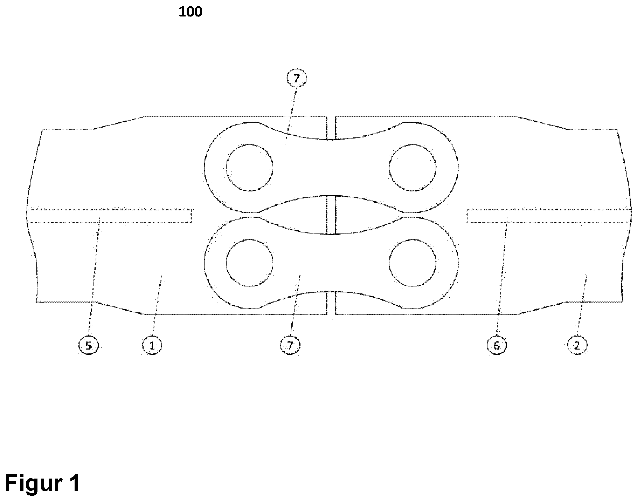

Figur 1 zeigt die erfindungsgemäße Verbindungsanordnung 100 in einer Draufsicht auf die Verbindungslaschen 7, die jeweils Teil einer Verbindungsgarnitur sind und mit denen ein erstes Gurtelement 1 eines ersten Holmelementes mit einem zweiten Gurtelement 2 eines zweiten Holmelementes verbunden werden soll. Das erste Gurtelement 1 des ersten Holmelementes ist dabei das wurzelseitige Segment, während das zweite Gurtelement 2 des zweiten Holmelementes das tipseitige Segment darstellt. Die erfindungsgemäße Verbindungsanordnung 100 verbindet demnach die Holmelemente des segmentierten Rotorblattes.

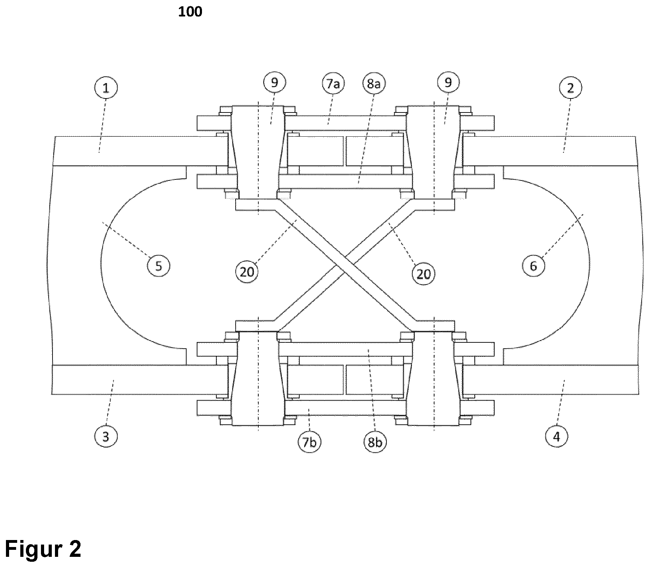

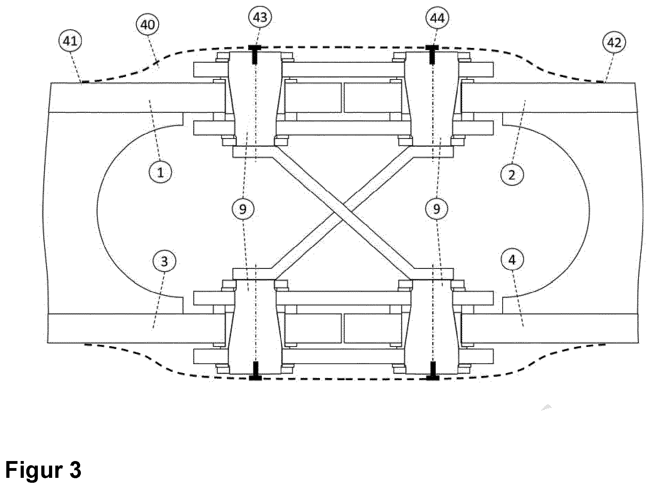

Figur 2 und 3 zeigen dabei eine Seitenansicht dieser Verbindungsanordnung 100 im Detail. Der gesamte Holm des Rotorblattes weist demnach ein erstes Holmelement mit den beiden Gurtelementen 1 und 3 sowie dem dazwischen angeordneten Stegelement 5 und ein zweites Holmelement mit den beiden Gurtelementen 2 und 4 sowie dem dazwischen angeordneten Stegelement 6.

Die Gurtelemente 1, 2, 3, 4 können im Verbindungsbereich eine größere Dicke oder eine größere Breite als im übrigen Rotorblatt aufweisen, um die Tragfähigkeit der Verbindung zu erhöhen. Im Vergleich zu konventionellen Verbindungstechniken, die beispielsweise auf metallischen Inserts beruhen, ist aber eine deutlich geringere oder keine Querschnittsvergrößerung der Gurte notwendig, da die Verbindungsfestigkeit extrem hoch ist. Die Gurte werden im Verbindungsbereich vorzugsweise mit Metalllagen verstärkt, so dass ein Faser-Metall-Laminat (FML) mit hoher Lochleibungsfestigkeit entsteht.

Die Verbindung der Blattsegmente erfolgt an den Querbolzen 9 mit Verbindungslaschen 7 und 8. Diese können wie in Figur 1 dargestellt, tailliert ausgeführt werden, um Gewicht und Materialkosten einzusparen. Das Material der Verbindungslaschen 7, 8 ist vorzugsweise ein Metall, z.B. Stahl (z.B. 1.7225). Metallische Verbindungslaschen können Kostengünstig aus Grobblechen (Dicke vorzugsweise 10 bis 100mm) hergestellt werden, beispielsweise durch Plasmaschneiden, Wasserstrahlschneiden, Laserschneiden, Drahterodieren oder Stanzen. Alternativ können die Verbindungslaschen auch in variablen, lastgerechten Dicken geschmiedet werden. Alternativ zu den metallischen Werkstoffen werden die Verbindungslaschen aus einem FML gefertigt ähnlich dem FML, welches im Verbindungsbereich der Gurte eingesetzt wird. Dadurch kann das Gewicht der Verbindungstechnik reduziert werden. Alternativ werden die Verbindungslaschen aus eine reinen Faserkunststoffverbund hergestellt, um weiter Gewicht zu sparen. Mittels faserverstärktem 3-D-Druck oder Fiber Placement können dabei die Faser optimal in Lastrichtung ausgerichtet werden, und zwar insbesondere in radialer und an tangentialer Richtung an den Laschenöffnungen, durch welche die Querbolzen 9 geführt sind.

Die Verbindungslaschen 7 und 8 verbinden die beiden Blattsegmente an den Querbolzen 9 mit maximaler Festigkeit und minimalen Gewicht.

Die Stegelemente 5, 6 der Blattsegmente sind an der Verbindungsstelle unterbrochen, um eine Zugänglichkeit zur Verbindungstechnik zu ermöglichen, so dass hier kein Schub übertragen werden kann. Zur Übertragung des Schubes über die Verbindungsstelle werden Schubverbindungselemente 20, bspw. in Form einer Schubstangen eingesetzt. Diese werden mit den Querbolzen 9 verbunden. Die Anbindung der Schubverbindungselemente 20 an die Querbolzen 9 ist besonders günstig, da diese Verbindungselemente aufgrund ihrer massiven Bauweise eine hohe Anbindungsfestigkeit ermöglichen, und so keine weiteren Anbindungsstellen an den Blattsegmenten ausgebildet werden müssen. So können Masse und Komplexität reduziert werden.

Die Gurtelemente 1 und 2 sowie 3 und 4 werden über die Querbolzen 9 mit den Verbindungslaschen 7 und 8 verbunden. Je Gurt werden vorzugsweise zwei Verbindungsgarnituren eingesetzt, welche aus je zwei Querbolzen 9 und einer äußeren Verbindungslasche 7 und einer inneren Verbindungslasche 8 bestehen.

Im Ausführungsbeispiel der Figuren 1, 2 und 3 sind die Gurtelemente 1 und 2 mit zwei Verbindungsgarnituren verbunden, wobei jede Verbindungsgarnitur zwei Verbindungslaschen 7a und 8a aufweist, um die Gurtelemente 1 und 2 mittels der Querbolzen 9 miteinander zu verbinden.

Dabei wird der Querbolzen des Gurtelementes 1 über ein Schubverbindungselement 20 mit dem Querbolzen des Gurtelementes 4 verbunden, während der Querbolzen des Gurtelementes 2 mit dem Querbolzen des Gurtelementes 3 mittels eines weiteren Schubverbindungselements 20 verbunden wird. Damit werden die gegenüberliegenden Gurtelemente der jeweils gegenüberliegenden Holmelemente kreuzweise verbunden. Mithilfe der Schubverbindungselemente wird somit ein erstes Gurtelement mit einem zweiten Gurtelement des gegenüberliegenden Holmelementes verbunden.

Die Gurtelemente 1, 2, 3, 4 können sich dabei in ihrer Breite, Dicke und im verwendeten Material unterscheiden. Hier können insbesondere im Wurzelsegment andere Parameter gewählt werden als im Tipsegment (z.B. eine größere Gurtbreite oder GFK anstelle von CFK), aber auch Unterschiede zwischen Saug- und Druckseite implementiert werden (z.B. eine größere Dicke auf der Saugseite). Auch die Verbindungslaschen 7a und 8a auf der Saugseite können bezüglich Breite, Dicke und Materialauswahl anders gestaltet sein als die Verbindungslaschen auf der Druckseite 7b und 8b, um ein lastgerechtes Design mit minimalem Gewicht zu erreichen.

Im Verbindungsbereich wird eine Abdeckung 40 benötigt, wie in Figur 3 gezeigt, um die Aerodynamik der Rotorblätter nicht zu beeinträchtigen und um das Eindringen von Wasser zu verhindern. Diese Abdeckung 40 kann in Profilumfangsrichtung aus mehreren Segmenten bestehen. Die Abdeckung wird auf der Saug- und Druckseite mit Verbindungselementen 43, 44, vorzugsweise Schrauben, mit dem Rotorblatt verbunden. Dabei dienen vorzugsweise die Stirnseiten der der Querbolzen 9 als Anschraubpunkte. An den Enden 41, 42 der Abdeckung 40 wird diese möglichst aerodynamisch glatt mit den Blatt verbunden. Dazu kann ein Klebstoff eingesetzt werden, oder die Enden 41, 42 bestehen aus einer vorgespannte Gummilippe, welche unter Vorspannung an den Blattsegmenten anliegt. Die Abdeckung 40 erhöht die Profildicke im Verbindungsbereich lokal um ca. 100 mm (jeweils ca. 50 mm auf Druck- und Saugseite). Bei einer angenommenen Profildicke von ca. 700 mm im Verbindungsbereich sind die aerodynamischen Verluste durch die Erhöhung der Profildicke minimal.

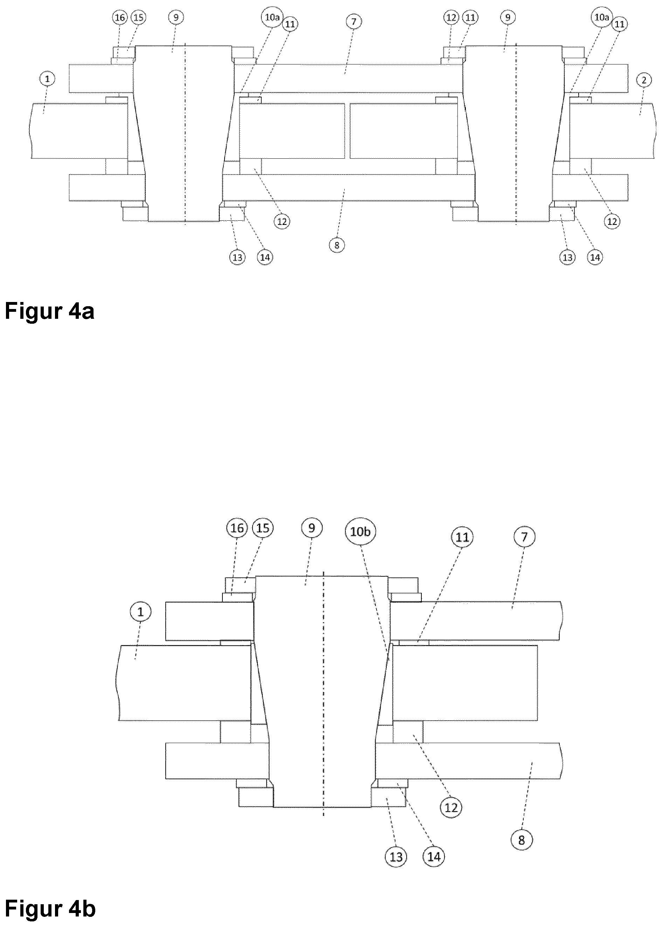

Die Querbolzen 9 werden vorzugsweise als radial und axial vorgespannte Bolzen (sogenannte RAX-Bolzen) in Kombination mit einer radial und axial vorgespannten Buchse 10a, 10b (sogenannte RAX-Buchse) ausgeführt, wie in der Figur 4a und im Detail in Figur 4b gezeigt ist. Dabei können Scheiben- und Sicherungselemente 11, 12, 13, 14, 15, 16 vorgesehen sein.

Die Verbindungslaschen 7, 8 werden in axialer Richtung des Querbolzens 9 mit den Gurtelementen 1, 2 verspannt. So entsteht einerseits die gewünschte axiale Vorspannung in der RAX-Verbindung. Andererseits wird durch diese axiale Verspannung auch erreicht, dass sich die Verbindungslaschen 7, 8 unter Drucklast nicht verdrehen können, da sie reibschlüssig mit den Gurtelementen 1, 2 verbunden sind.

Alternativ können die Schubstangen 20 ohne die Unterlegscheiben 15 und 16 direkt mit den Querbolzen 9 verbunden werden. Somit wird die Anzahl der Einzelteile reduziert und es entsteht eine formschlüssige Verbindung der Schubstangen 20.

In einer alternativen Ausführungsform ist die RAX-Buchse 10b ohne Flansch ausgeführt, wie in Figur 4b gezeigt. Dadurch kann Masse und Kosten eingespart werden. Außerdem wird die Bauhöhe in axialer Bolzenrichtung verringert und damit die Biegebelastung auf die Bolzen. Außerdem wird der Überstand über das aerodynamisch optimale Profil verringert. Außerdem wird der axiale Anpressdruck auf die Gurtelemente 1, 2 homogener über die Fläche der Scheibe 11 verteilt als bei der Einleitung über einen Flansch.

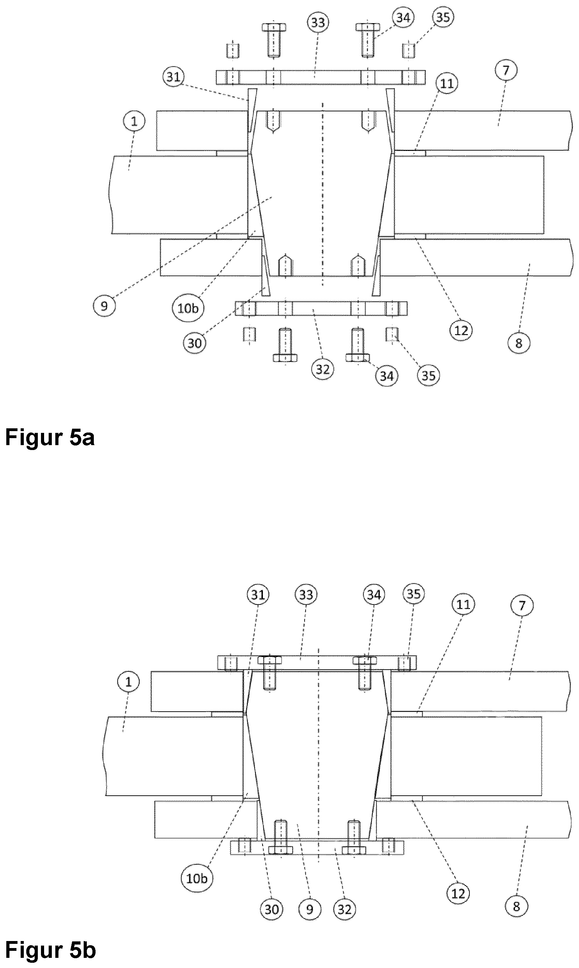

In einer weiteren Ausführungsform, die in der Figur 5a und 5b gezeigt ist, ist der Querbolzen 9 auch an seinen Enden konisch ausgeführt. Konische Spreizhülsen 30 und 31 werden mit Druckdeckeln 32, 33 und Spannschrauben 34 in den Zwischenraum von Bohrungen in den Verbindungslaschen 7, 8 und den konischen Bolzenenden gepresst. Mithilfe der Spannschraube 34 werden dabei die Druckdeckel 32, 33 mit dem Querbolzen an jeweils gegenüberliegenden Enden des Querbolzens 9 verbunden.

Die Spreizhülsen 30, 31 werden aus einem weicheren Metall (z.B. weicherer Stahl oder Aluminium) hergestellt und sind ein- oder mehrfach axial geschlitzt, so dass sie sich bei der Montage plastisch und elastisch verformen können. So wird ein Toleranzausgleich zwischen den Bohrungen in den Verbindungslaschen 7, 8 und der Achse des Querbolzens 9 erreicht, so dass Positionsabweichungen korrigierbar sind.

Nach der Montage der Spreizhülse 30, 31 ist die Verbindung von Querbolzen 9 und den Verbindungslaschen 7, 8 spielfrei, wodurch die Dauerfestigkeit der Verbindungslaschen 7, 8 gesteigert wird. Außerdem kann in dieser Ausführungsform der axiale Platzbedarf auf der Innenseite reduziert werden, denn der Konus, welcher an Querbolzen 9 im mittleren Bereich ausgebildet ist, um die Buchse 10b aufzunehmen, dient gleichzeitig auch als Konus für die Spreizhülse 30. So kann das Unterlegscheibe 11 in Form eines Druckstücks deutlich flacher ausgeführt werden. Durch die kompakte Bauweise mit minimalem axialem Platzbedarf hat diese Variante die höchste Festigkeit und das geringste Gewicht.

Nach dem Einpressen der Spreizhülsen 30, 31 werden Madenschrauben 35 in die Druckdeckel 32, 33 eingeschraubt, bis die Madenschrauben mit den Verbindungslaschen 7, 8 in Kontakt sind. Es wird ein kontrolliertes Drehmoment auf die Madenschrauben 35 aufgebracht, wodurch die Verbindungslaschen 7, 8 mit den Druckstücken 11, 12 sowie dem Gurtelement 1 in axialer Bolzenrichtung verspannt werden. Es entsteht die gewünschte axiale Vorspannung der RAX-Verbindung im Gurtelement 1. Durch Nachspannen der Madenschrauben 35 kann eine eventuelle Abnahme der axialen Vorspannung im Betrieb kompensiert werden, und zwar mit einfachen Handwerkzeugen (Drehmomentschlüssel). Außerdem ist es auch möglich, die Spreizhülsen 30, 31 nachzuspannen, falls diese sich im Betrieb lockern oder verformen sollten, indem die Schrauben 34 nachgespannt werden.

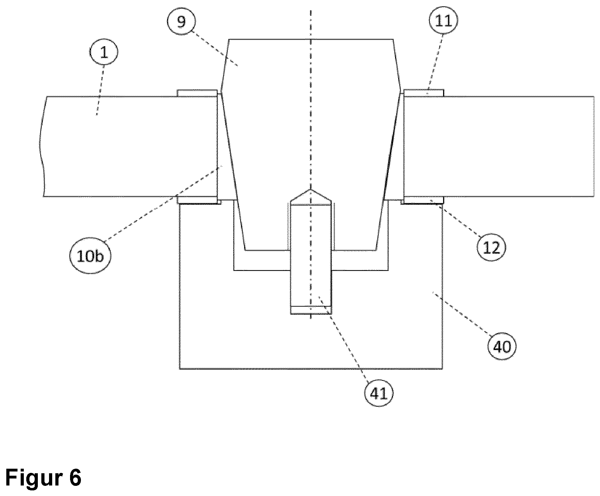

Bei der Montage des Querbolzens 9 muss die Buchse 10b in axialer Richtung fixiert werden, damit sie nicht aus der Bohrung des Gurtes gedrückt wird. Dafür eignet sich ein Montagewerkzeug 50 mit einem passenden Absatz, wie in Figur 6 gezeigt, welches sowohl an der Unterlegscheibe 12 als auch an der Buchse 10b anliegt und deren relative axiale Position einstellt. Das Montagewerkzeug 50 kann beispielsweise ein Schraubenspannzylinder in Kombination mit einem Zugbolzen 51 sein.

### Bezugszeichenliste

- 1: erstes Gurtelement des ersten Holmelementes
- 2: erstes Gurtelement des zweiten Holmelementes
- 3: zweites Gurtelement des ersten Holmelementes
- 4: zweites Gurtelement des zweiten Holmelementes
- 5: Stegelement des ersten Holmelementes
- 6: Stegelement des ersten Holmelementes
- 7, 8: Verbindungslaschen
- 9: Querbolzen
- 10: konisch geformte Buchse / Spannbuchse
- 11, 12, 13, 14, 15, 16: Scheiben- und Sicherungselemente
- 20: Schubverbindungselement
- 30, 31: Spreizhülse
- 32, 33: Druckdeckel
- 34: Spannschrauben
- 35: Madenschrauben
- 40: Abdeckung
- 41, 42: Enden der Abdeckung
- 43, 44: Verbindungselemente der Abdeckung
- 50: Montagewerkzeug
- 51: Zugbolzen
- 100: Verbindungsanordnung

## Patentansprüche

1. Segmentiertes Rotorblatt für Windkraftanlagen mit mindestens zwei Blattsegmenten, die sich in entgegengesetzter Richtung von einer Fügestelle aus in eine Längsrichtung erstrecken, wobei jedes Blattsegment mindestens ein innenliegendes Holmelement aufweist, das ein Strukturelement des Rotorblattes bildet, wobei
a) das erste Holmelement des ersten Blattsegmentes und das zweite Holmelement des zweiten Blattsegmentes an der Fügestelle mit ihren Stirnseiten mittels einer Verbindungsanordnung (100) aneinandergefügt sind,
b) wobei die Verbindungsanordnung (100) eine Mehrzahl von Verbindungsgarnituren aufweist, die jeweils die Holmelemente miteinander verbinden,
c) wobei jede Verbindungsgarnitur einen ersten Querbolzen (9), einen zweiten Querbolzen (9) und wenigstens eine Verbindungslasche umfasst, die an ihren Enden eine erste Laschenöffnung und eine zweite Laschenöffnung aufweist,
d) wobei bei jeder Verbindungsgarnitur der erste Querbolzen (9) quer zur Längsrichtung des Rotorblattes durch eine Holmöffnung im ersten Holmelement sowie die erste Laschenöffnung der Verbindungslasche und der zweite Querbolzen (9) quer zur Längsrichtung des Rotorblattes durch eine Holmöffnung im zweiten Holmelement sowie die zweite Laschenöffnung der Verbindungslasche geführt ist, sodass die Verbindungslasche die Holmelemente miteinander verbindet, und
**dadurch gekennzeichnet, dass**
e) wenigstens der erste Querbolzen (9) einer ersten Verbindungsgarnitur und der zweiten Querbolzen (9) einer der ersten Verbindungsgarnitur gegenüberliegenden zweiten Verbindungsgarnitur über zumindest ein erstes Schubverbindungselement (20) miteinander verbunden sind.

2. Rotorblatt nach Anspruch 1, **dadurch gekennzeichnet, dass** der zweite Querbolzen (9) der ersten Verbindungsgarnitur und der erste Querbolzen (9) der zweiten Verbindungsgarnitur über ein zweites Schubverbindungselement (20) miteinander verbunden sind.

3. Rotorblatt nach Anspruch 1 oder 2, **dadurch gekennzeichnet, dass** das erste Holmelement und das zweite Holmelement jeweils ein erstes Gurtelement und ein gegenüberliegendes zweites Gurtelement haben, die beide durch wenigstens ein dazwischenliegendes Stegelement miteinander verbunden sind, wobei die Querbolzen (9) in Holmöffnungen der Gurtelemente quer zur Längsrichtung des Rotorblattes eingebracht sind.

4. Rotorblatt nach Anspruch 3, **dadurch gekennzeichnet, dass** die erste Verbindungsgarnitur das erste Gurtelement des ersten Holmelementes(1) mit dem ersten Gurtelement des zweiten Holmelementes (2) und die zweite Verbindungsgarnitur das zweite Gurtelement des ersten Holmelementes (3) mit dem zweiten Gurtelement des zweiten Holmelementes (4) verbindet.

5. Rotorblatt nach einem der vorhergehenden Ansprüche, **dadurch gekennzeichnet, dass** die Verbindungslaschen (7, 8) an ihren beiden Enden einen Kopfabschnitt mit den Laschenöffnungen aufweisen, die über einen Verbindungsabschnitt miteinander verbunden sind, wobei die Breite des Verbindungsabschnitts in der Mitte verjüngt ist.

6. Rotorblatt nach einem der vorhergehenden Ansprüche, **dadurch gekennzeichnet, dass** in zumindest einer Holmöffnung der Holmelemente eine Buchse mit einer konischen Innenwandung eingebracht ist, die mit einem Querbolzen (9) mit einer konischen Außenwandung im eingesetzten Zustand derart zusammenwirkt, dass eine radiale Spannkraft auf die Innenwandung der Holmöffnung aufgebracht wird.

7. Rotorblatt nach einem der vorhergehenden Ansprüche, **dadurch gekennzeichnet, dass** der Querbolzen (9) im Bereich der Laschenöffnung eine konische Außenwandung aufweist, sodass zwischen einer Innenwandung der Laschenöffnung und der konischen Außenwandung des Querbolzens (9) ein Hohlraum entsteht, in den eine konische Spreizhülse (30, 31) eingesetzt ist, die mittels eines an einer Stirnseite des Querbolzens (9) angeordneten Druckdeckel (32, 33) in den Hohlraum eingepresst ist.

8. Windkraftanlage mit einem Mehrblattrotor, der mindestens ein Rotorblatt nach einem der vorhergehenden Ansprüche aufweist.

## Claims

1. Segmented rotor blade for wind turbines with at least two blade segments extending in opposite directions from a joint in a longitudinal direction, each blade segment having at least one internal spar element forming a structural member of the rotor blade, **wherein**
a) the first spar element of the first blade segment and the second spar element of the second blade segment are joined to each other at the joint by means of a connecting arrangement (100) with their front sides,
b) wherein the connecting arrangement (100) comprises a plurality of connecting sets, each of which connects the spar elements to one another,
c) wherein each connecting set comprises a first transverse bolt (9), a second transverse bolt (9) and at least one connecting strap which has a first strap opening and a second strap opening at its ends,
d) wherein, in each connecting set, the first transverse bolt (9) is guided transversely to the longitudinal direction of the rotor blade through a spar opening in the first spar element and the first strap opening of the connecting strap, and the second transverse bolt (9) is guided transversely to the longitudinal direction of the rotor blade through a spar opening in the second spar element and the second strap opening of the connecting strap, so that the connecting strap connects the spar elements to one another, and **characterized in that**
e) at least the first transverse bolt (9) of a first connecting set and the second transverse bolt (9) of a second connecting set opposite the first connecting set are connected to one another via at least a first shear connecting element (20).

2. Rotor blade according to claim 1, **characterized in that** the second transverse bolt (9) of the first connecting set and the first transverse bolt (9) of the second connecting set are connected to each other via a second shear connecting element (20).

3. Rotor blade according to claim 1 or 2, **characterized in that** the first spar element and the second spar element each have a first flange element and an opposite second flange element, both of which are connected to one another by at least one web element located therebetween, wherein the transverse bolts (9) are inserted into spar openings of the flange elements transversely to the longitudinal direction of the rotor blade.

4. Rotor blade according to claim 3, **characterized in that** the first connecting set connects the first flange element of the first spar element (1) to the first flange element of the second spar element (2) and the second connecting set connects the second flange element of the first spar element (3) to the second flange element of the second spar element (4).

5. Rotor blade according to one of the preceding claims, **characterized in that** the connecting straps (7, 8) have at both ends a head section with the strap openings, which are connected to each other via a connecting section, the width of the connecting section tapering in the middle.

6. Rotor blade according to one of the preceding claims, **characterized in that** a bushing with a conical inner wall is inserted into at least one spar opening of the spar elements, which cooperates with a transverse bolt (9) with a conical outer wall in the inserted state in such a way that a radial clamping force is applied to the inner wall of the spar opening.

7. Rotor blade according to one of the preceding claims, **characterized in that** the transverse bolt (9) has a conical outer wall in the area of the strap opening, so that a cavity is formed between an inner wall of the strap opening and the conical outer wall of the transverse bolt (9), into which a conical expansion sleeve (30, 31) is inserted, which is pressed into the cavity by means of a pressure cap (32, 33) arranged on an end face of the transverse bolt (9).

8. Wind turbine with a multi-blade rotor comprising at least one rotor blade according to one of the preceding claims.

## Revendications

1. Pale de rotor segmentée pour éoliennes, comprenant au moins deux segments de pale qui s'étendent dans des sens opposés à partir d'un point d'assemblage dans une direction longitudinale, chaque segment de pale comportant au moins un élément de longeron interne qui forme un élément structurel de la pale de rotor,
dans laquelle
a) le premier élément de longeron du premier segment de pale et le deuxième élément de longeron du deuxième segment de pale sont assemblés l'un à l'autre au niveau du point d'assemblage par leurs faces frontales au moyen d'un dispositif de liaison (100),
b) le dispositif de liaison (100) comporte plusieurs ensembles de liaison reliant respectivement les éléments de longeron entre eux,
c) chaque ensemble de liaison comprend un premier boulon transversal (9), un deuxième boulon transversal (9) et au moins une patte de liaison qui présente, à ses extrémités, une première ouverture de patte et une deuxième ouverture de patte,
d) sachant que dans chaque ensemble de liaison, le premier boulon transversal (9) est mené transversalement à la direction longitudinale de la pale de rotor à travers une ouverture de longeron ménagée dans le premier élément de longeron et à travers la première ouverture de la patte de liaison, et que le deuxième boulon transversal (9) est mené transversalement à la direction longitudinale de la pale de rotor à travers une ouverture de longeron ménagée dans le deuxième élément de longeron et à travers la deuxième ouverture de la patte de liaison, de sorte que la patte de liaison relie les éléments de longeron entre eux,
**caractérisée en ce que**
e) au moins le premier boulon transversal (9) d'un premier ensemble de liaison et le deuxième boulon transversal (9) d'un deuxième ensemble de liaison opposé au premier ensemble de liaison sont reliés l'un à l'autre par au moins un premier élément de liaison de poussée (20).

2. Pale de rotor selon la revendication 1,
**caractérisée en ce que** le deuxième boulon transversal (9) du premier ensemble de liaison et le premier boulon transversal (9) du deuxième ensemble de liaison sont reliés l'un à l'autre par un deuxième élément de liaison de poussée (20).

3. Pale de rotor selon la revendication 1 ou 2,
**caractérisée en ce que** le premier élément de longeron et le deuxième élément de longeron comportent chacun un premier élément de membrure et un deuxième élément de membrure opposé qui sont tous deux reliés entre eux par au moins un élément d'âme intermédiaire, les boulons transversaux (9) étant insérés dans les ouvertures de longeron des éléments de membrure transversalement à la direction longitudinale de la pale de rotor.

4. Pale de rotor selon la revendication 3,
**caractérisée en ce que** le premier ensemble de liaison relie le premier élément de membrure du premier élément de longeron (1) au premier élément de membrure du deuxième élément de longeron (2), et le deuxième ensemble de liaison relie le deuxième élément de membrure du premier élément de longeron (3) au deuxième élément de membrure du deuxième élément de longeron (4).

5. Pale de rotor selon l'une des revendications précédentes,
**caractérisée en ce que** les pattes de liaison (7, 8) présentent, à leurs deux extrémités, une portion de tête munie des ouvertures de patte, reliées entre elles par une portion de liaison, la largeur de la portion de liaison étant rétrécie au milieu.

6. Pale de rotor selon l'une des revendications précédentes,
**caractérisée en ce qu'**une douille à paroi intérieure conique est insérée dans au moins une ouverture de longeron des éléments de longeron, laquelle coopère avec un boulon transversal (9) à paroi extérieure conique, à l'état inséré, de telle sorte qu'une force de serrage radiale est appliquée à la paroi intérieure de l'ouverture de longeron.

7. Pale de rotor selon l'une des revendications précédentes,
**caractérisée en ce que** le boulon transversal (9) présente une paroi extérieure conique au niveau de l'ouverture de patte, de sorte qu'une cavité est formée entre une paroi intérieure de l'ouverture de patte et la paroi extérieure conique du boulon transversal (9), dans laquelle est inséré un manchon expansible conique (30, 31) qui est enfoncé dans la cavité au moyen d'un capuchon de pression (32, 33) disposé sur une face frontale du boulon transversal (9).

8. Éolienne à rotor multipale, lequel comprend au moins une pale de rotor selon l'une des revendications précédentes.
